# EUROPEAN PATENT SPECIFICATION

(11) **EP 1 419 084 B1**
(45) Date of publication and mention of the grant of the patent: **23.02.2005**
(21) Application number: 02755494.8
(22) Date of filing: 12.08.2002
(51) Int. Cl.: B62D 55/116

(54) **ARTICULATED CRAWLER-TRACKED CARRIAGE**
GELENKIGES RAUPENLAUFWERK
CHARIOT A CHENILLES ARTICULE

(30) Priority: 24.08.2001 IT PR20010054
(43) Date of publication of application: 19.05.2004
(73) Proprietor: Ellettari S.p.a., 43044 Loc. Madregolo - Collecchio (Parma) (IT)
(72) Inventor: ELLETTARI, Luca, I-43044 Loc. Maregolog - Collecchio (Par (IT)
(74) Representative: Corradini, Corrado
(86) International application number: PCT/IB2002/003272
(87) International publication number: WO 2003/018389

(56) References cited:
- WO-A-93/25429
- DE-B- 1 205 844

## Description

### TECHNICAL FIELD

This invention relates to a crawler-tracked carriage comprising at least one crawler track which supports a platform, the crawler track comprising a beam secured to the platform and carrying at is ends two wheels about which there extends a catenary assembly (consisting usually of an articulated chain formed from links provided with shoes, or a sort of endless band of synthetic material).

### BACKGROUND ART

The typical application of the invention is for industrial crawler-tracked carriages, however the invention can also relate to other applications.

Industrial crawler-tracked carriages consist substantially of self-propelled platforms which form the base of a large number of industrial machines, essentially for construction sites: scrapers, excavators, drillers etc., but also for agricultural and other uses. These carriages normally comprise a pair of parallel crawler tracks, each moved independently to be able to advance, withdraw and steer or in any way manoeuvre over the ground, and to which there is rigidly fixed a platform, sometimes consisting of a very simple frame, to enable fixing of an superstructure consisting of the most disparate types of machines (drillers, excavators, shovels, etc.). These crawler tracks are of rigid structure, i.e. they each comprise a rigid longitudinal beam, at the ends of which are positioned two wheels about which there extends a catenary assembly; by means of a motor-driven motion reducer, one of these wheels, which is toothed, drives the catenary assembly which surrounds the beam and engages the ground with its links.

In order to adapt the structure to the often very disconnected ground, in certain cases the entire crawler track is connected to the platform by means of a pin, this allowing a certain degree of independent oscillation of the two beams of the crawler tracks while however leaving the rigid nature of the beams unaltered.

An object of this invention is to provide a crawler-tracked carriage able to move while adapting itself to the roughness of the ground in order to ensure greater stability and manageability while manoeuvring, and so provide greater safety to the overlying structure.

WO 9 325 429 discloses a crawler-tracked carriage according to the preamble of claim 1.

### DISCLOSURE OF THE INVENTION

This and further objects are attained by the invention as characterised in claim 1.

The invention is based on the fact that in each crawler track (or at least in one of them) the beam is composed of two (or more) beam segments connected together at a common end such as to be able to oscillate mutually about a first substantially horizontal, transverse axis.

Each of the crawler tracks is connected to the platform structure and in addition the two crawler tracks are connected together, however all the connections are made in such a manner as to allow some degrees of freedom: there are no rigid connections, but only articulations which enable self-adaptation to the ground conditions by each crawler track with absolute support safety for the platform.

The invention is described in detail hereinafter with the aid of the accompanying figures which illustrate a non-exclusive embodiment thereof by way of example.

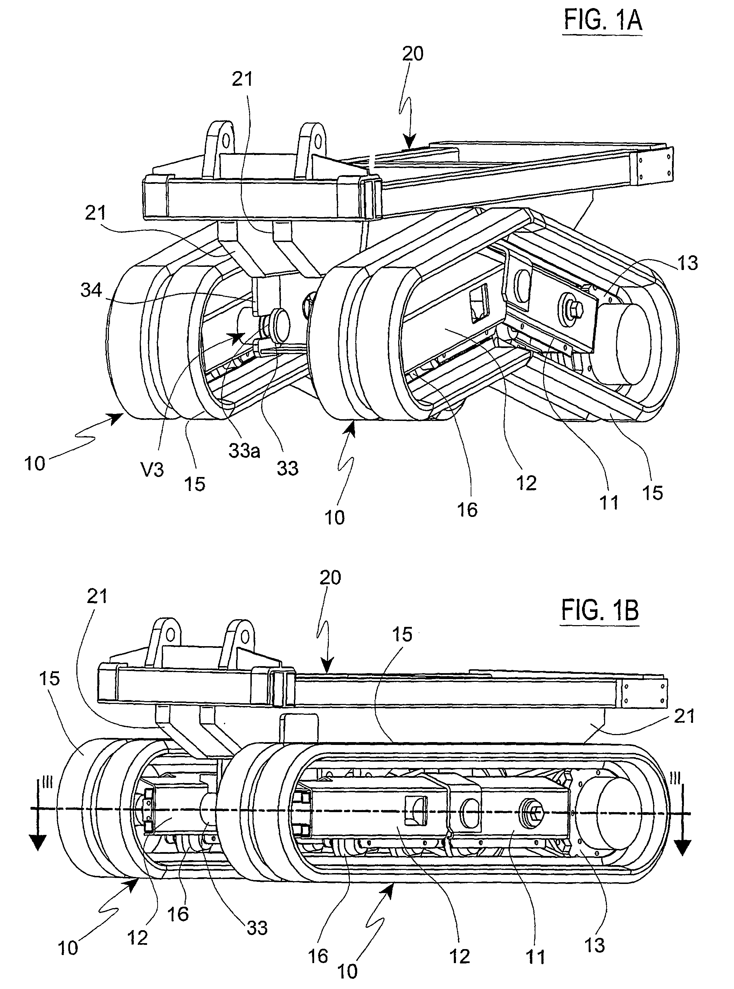

Figure 1A is a perspective view of the crawler-tracked carriage of the invention, in a configuration in which it rests on a cusp or prominence.
Figure 1B is the same view as Figure 1A, with the carriage in a configuration in which it rests on a flat surface.

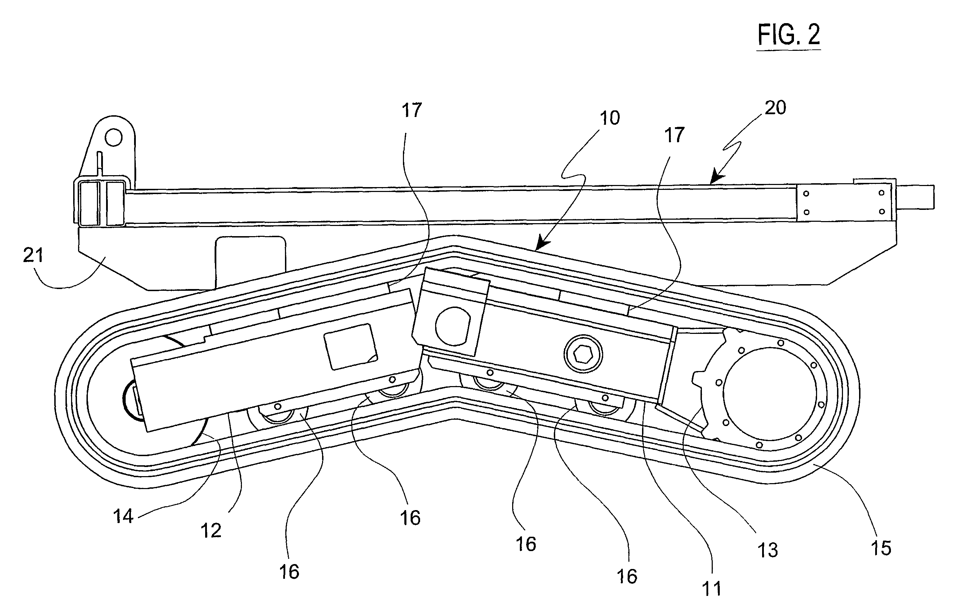

Figure 2 is a side view of Figure 1A.

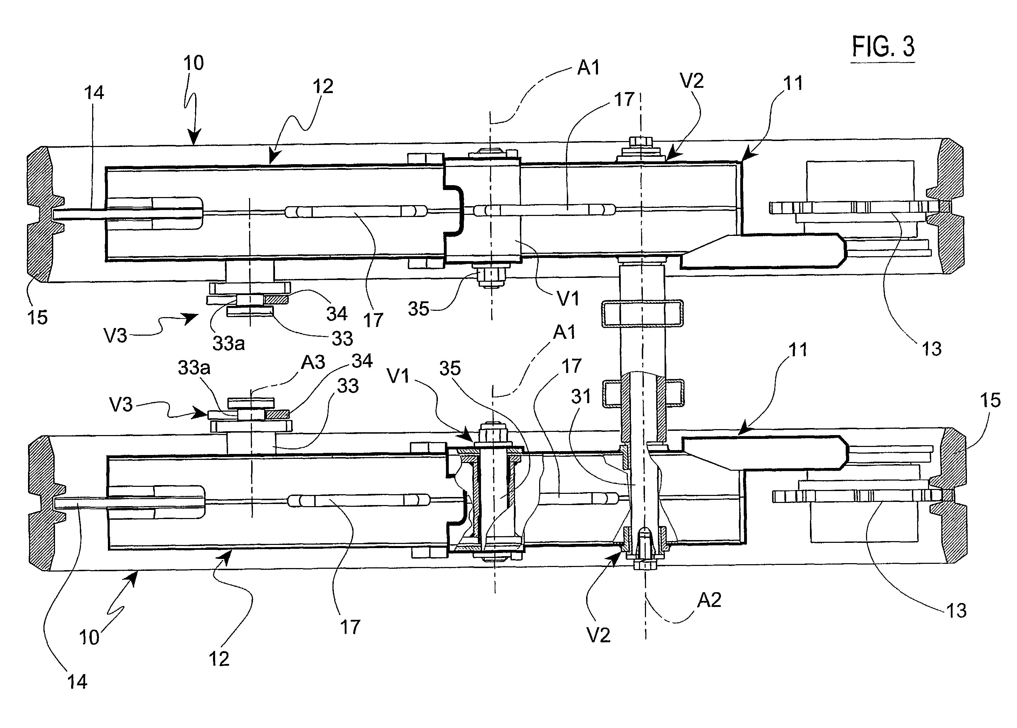

Figure 3 is a section on the plane III of Figure 1 B.
Figure 4 is a schematic perspective view of the significant elements of the lower part of the carriage.
Figures 5A, 5B and 5C show in sequence three configurations of the carriage of Figure 1, in overcoming a round obstacle, such as a boulder.
Figure 6 shows a sequence of different configurations of the carriage of Figure 1, while ascending onto and descending from the load floor of a transporting truck.

In a like manner to traditional crawler-tracked carriages, the carriage of the invention comprises a platform 20 which rests, via longitudinal beams 21, on a pair of crawler tracks, each of which (indicated overall by 10) comprises a longitudinal beam secured to the platform 20 and carrying at its ends two wheels, namely a drive wheel 13 and a tensioning wheel 14, about which there extends a catenary assembly 15 consisting usually of an articulated chain formed from links provided with shoes, or of a sort of endless band of synthetic material, as in the case illustrated in the figures.

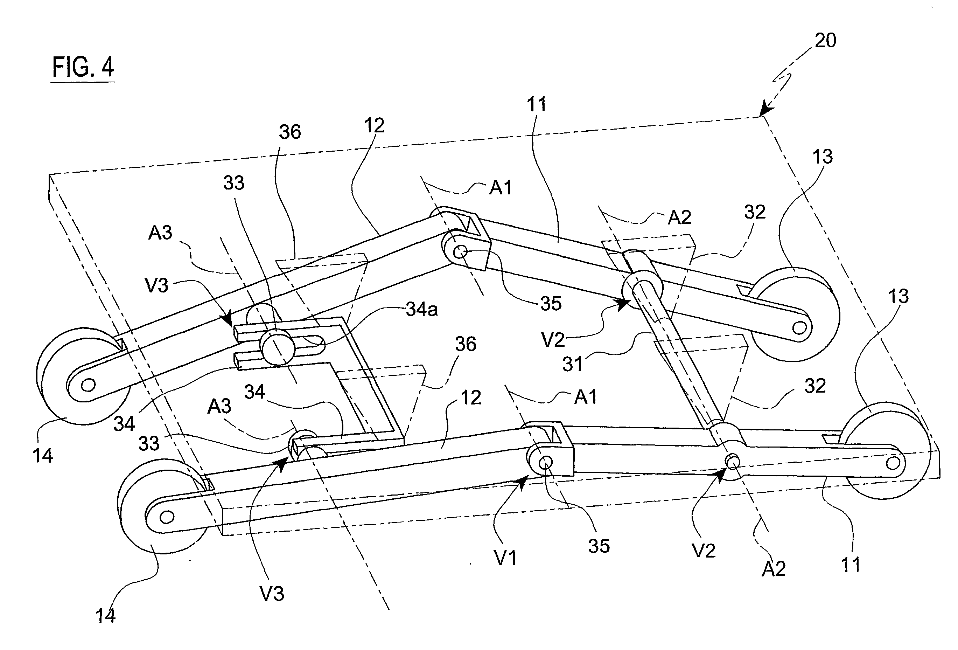

According to the invention, within each crawler track 10 (or at least in one of them), in contrast to traditional crawler tracks, the beam is composed of at least two beam segments 11 and 12 connected together at a common end by a hinge V1, enabling them to mutually oscillate about a first substantially horizontal, transverse axis A1 (see Figure 4) defined by the pin 35 of the hinge V1. Within each crawler track 10, the two beam segments 11 and 12 are free to oscillate independently of the beam segments of the other crawler track 10. At the free end of the first beam segment 11 there is positioned a wheel, for example the drive wheel 13, the other wheel 14 being positioned at the free end of the other beam segment 12.

The first beam segment 11 of each crawler track is secured to the platform 20 by a second hinge V2, positioned in an intermediate point of the beam segment and having a second axis of oscillation A2 parallel to and distant from said first axis A1.

In particular, the two hinges V2 of the two crawler tracks 10 both involve one and the same shaft 31, which is fixed rigidly to the platform 20 (for example by brackets 32) to support the weight of the platform 20 and of the relative superstructure (drilling machine, excavator, etc.), which is not shown in the drawing but in reality is always integral with the platform 20.

The second beam segment 12 of each crawler track 10 is secured to the platform 20 by a linkage V3 which presents a third axis of oscillation A3 parallel to and distant from said first axis A1, and is able to slide in a direction having at least one longitudinal component, in particular in a totally longitudinal, horizontal direction. In particular, according to the scheme of Figure 4, each linkage V3 comprises a pin 33 fixed to the respective beam segment 12, which is engaged in a respective guide 34 joined to the platform 20 (for example by brackets 36) and having a rectilinear slot 34a defining a slide track for the pin 33 in said longitudinal horizontal direction.

Each pin 33 also possesses an annular groove 33a within which the arms of the guide 34 slide as an exact fit, to define a restraint against transverse movements of the pin 33 relative to the guide 34. Essentially, the linkage V3 enables the beam segment 12 to oscillate about the axis A3 and this to translate along the longitudinal track defined by the guide 34.

When one beam segment oscillates relative to the other about the axis A1, the first beam segment 11 oscillates relative to the platform 20 about the second axis A2 which is fixed (with respect to the platform 20), with consequent movement (translation) of the first axis A1 and of the third axis A3, this latter along the guide 34.

The axes A1 and A3 of one crawler track 10 are free to translate independently relative to the corresponding axes A1 and A3 of the other crawler-track.

Each beam segment 11, 12 carries one or more (two in the figures) idle lower wheels 16, with which it rests and rolls on the inner face of the catenary assembly 15, and one or more (one in the figures) fixed upper plates 17, on which there slidingly rests the inner face of the catenary assembly, which is maintained by them at a suitable distance from the longitudinal axis of the beam segment such that its upper and lower branches are parallel.

Consequently, the crawler-tracked carriage of the invention does not have a completely rigid structure, but is provided with a certain degree of freedom; in this respect, as the beam of each of its crawler tracks 10 (or at least one of them) consists of two beam segments 11, 12 hinged together at V2, each individual crawler track 10 is able to bend freely through even a considerable angle to overcome roughness and obstacles on the ground.

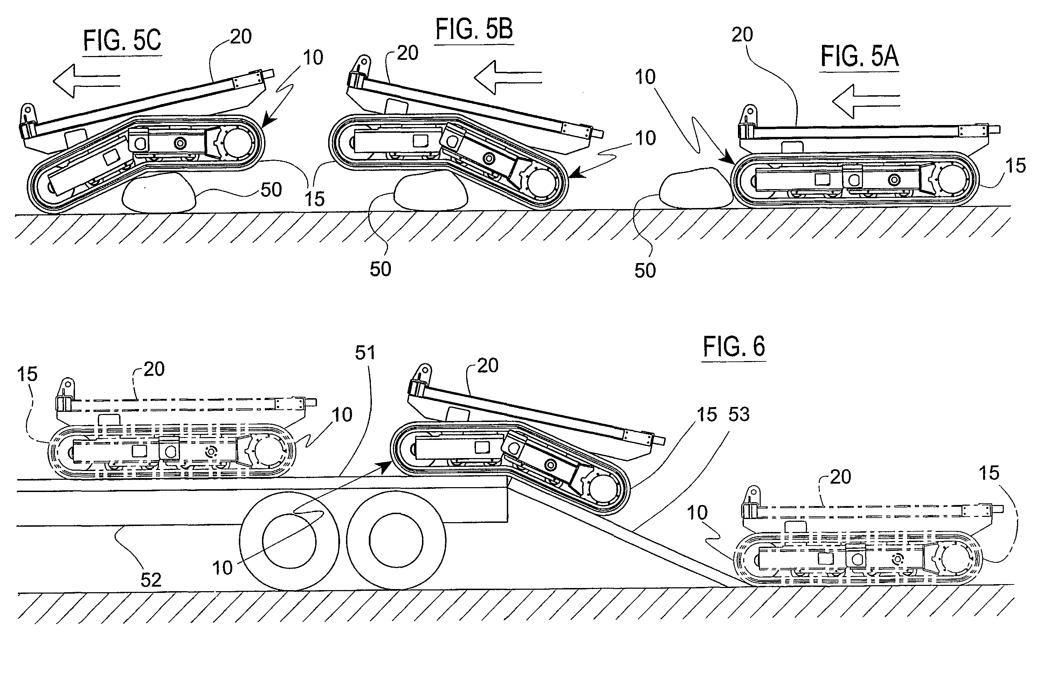

Figures 5A, 5B and 5C show the advancement of the crawler-tracked carriage along the ground and the overcoming of an obstacle defined by a boulder 50, whereas Figure 6 shows the same crawler-tracked carriage while it ascends onto and descends from the load floor 51 of a transporting truck 52, via an inclined ramp 53.

In such cases the advantage of the articulated crawler-tracked carriage of the invention compared with a traditional rigid-beam carriage is evident, this latter in a similar situation being compelled to fall forwards with considerable stressing of the truck structures during loading, or with a considerable risk of losing adhesion to the ramps and ruinous falling onto the ground during unloading. During its loading/unloading, a traditional crawler-tracked carriage is under particularly critical conditions of safety and manoeuvrability precisely because of its rigid-beam structure: in this respect it is noted that on passing beyond the point of slope change of the resting surface between the ramps and the load compartment, the entire machine remains balanced on a few centimetres of support.

In contrast, the articulated crawler-tracked carriage of the invention enables sufficient adhesion to be maintained on two support surfaces, as the two articulated parts of the crawler track 10 are able to rest completely or almost completely on the two surfaces presented by the floor 51 and the ramp 53, even simultaneously, as clearly shown in Figure 6.

## Claims

1. A crawler-tracked carriage, in particular for industrial use, comprising at least one crawler track which supports a platform (20), said crawler track comprising a beam carrying at is ends two wheels (13, 14) about which there extends a catenary assembly (15), the beam being composed of at least two beam segments (11, 12) connected together at a common end such as to be able to oscillate mutually about a first substantially horizontal, transverse axis (A1),
**characterised in that** a first beam segment (11) is secured to the platform (20) by a hinge (V2) having a second axis of oscillation (A2) distant from said first axis (A1), and the second beam segment (12) is secured to the platform (20) by a linkage (V3) which has a third axis of oscillation (A3) distant from said first axis (A1), and is able to slide in a direction having at least one longitudinal component.

2. A crawler-tracked carriage as claimed in claim 1, **characterised in that** said hinge (V2) is having a second axis of oscillation (A2) parallel to said first axis (A1), and that the third axis of oscillation (A3) is parallel to said first axis (A1),

3. A crawler-tracked carriage as claimed in claim 2, **characterised in that** said linkage (V3) between the second beam segment (12) and the platform (20) comprises a pin (33) fixed to the said beam segment (12) and of which the axis (A3) defines the axis of oscillation, said pin (33) being engaged in a guide (34) rigid with the platform (20) and defining a slide track for the pin (33).

## Patentansprüche

1. Ein Raupenlaufwerk, besonders für industrielle Anwendung, bestehend aus mindestens einem Raupenantrieb, der eine Plattform (20) trägt, genannter Raupenantrieb aus einem Längsträger besteht, der an seinen Enden zwei Räder (13, 14) aufweist, über welche eine Antriebsband (15) läuft, der Längsträger sich aus mindestens zwei Längsträgersegmenten (11, 12) zusammensetzt, die an einem gemeinsamen Ende so miteinander verbunden sind, dass sie gegenseitig um eine erste, im wesentlichen horizontale Querachse (A1) schwingen können,
**dadurch gekennzeichnet, dass** ein erstes Längsträgersegment (11) mittels eines Gelenkes (V2) mit der Plattform (20) verbunden ist, mit einer zweiten Schwingungsachse (A2) mit Abstand zu der genannten ersten Achse (A1), und das zweite Längsträgersegment (12) mittels eines Kupplungselementes (V3) mit der Plattform (20) verbunden ist, mit einer dritten Schwingungsachse (A3) mit Abstand zu der genannten ersten Achse (A1), und der Fähigkeit, in eine Richtung zu gleiten mit mindestens einer Längskomponente.

2. Ein Raupenlaufwerk gemäß Patentanspruch 1, **dadurch gekennzeichnet, dass** genanntes Gelenk (V2) parallel zu der genannten ersten Achse (A1) eine zweite Schwingungsachse (A2) besitzt, und dass die dritte Schwingungsachse (A3) parallel zu der genannten ersten Achse (A1) ist.

3. Ein Raupenlaufwerk gemäß Patentanspruch 2, **dadurch gekennzeichnet, dass** genanntes Kupplungselement (V3) zwischen dem zweiten Längsträgersegment (12) und der Plattform (20) einen Bolzen (33) aufweist, der am genannten Längsträgersegment (12)angebracht ist und dessen Achse (A3)die Schwingungsachse definiert, genannter Bolzen (33) in einer Führung (34) läuft, die starr mit der Plattform (20) verbunden ist und die Gleitspur für den Bolzen (33) definiert.

## Revendications

1. Un chariot à chenilles articulé, notamment pour tout usage industriel, comprenant au moins une chenille qui soutient une plate-forme (20), ladite chenille comprenant une poutre portant à ses extrémités deux roues (13, 14) autour desquelles s'étend une unité caténaire (15), la poutre se composant d'au moins deux segments de poutre (11, 12) reliés ensemble à une extrémité commune de façon à pouvoir osciller réciproquement tout autour d'un premier axe transversal, substantiellement horizontal (A1), **caractérisé en ce que** le premier segment de la poutre (11) est attaché à la plate-forme (20) par un gond (V2) ayant un deuxième axe d'oscillation (A2) éloigné dudit premier axe (A1), et que le deuxième segment de la poutre (12) est attaché à la plate-forme (20) par un attelage (V3) dont le troisième axe d'oscillation (A3) est éloigné dudit premier axe (A1), et peut glisser en un sens ayant au moins un composant longitudinal.

2. Un chariot à chenilles articulé selon la revendication 1, **caractérisé en ce que** ledit premier gond (V2) est en train d'avoir un deuxième axe d'oscillation (A2) parallèle audit premier axe (A1), et que le troisième axe d'oscillation (A3) est parallèle audit premier axe (A1).

3. Un chariot à chenilles selon la revendication 2, **caractérisé en ce que** ledit attelage (V3) entre le deuxième second segment de poutre (12) et la plate-forme (20) comprend une aiguille (33) fixée audit segment de poutre (12) et dont l'axe (A3) définit l'axe d'oscillation, ladite aiguille (33) étant emboîtée dans un guide (34) rigide avec la plate-forme (20) et définissant une chenille glissante pour l'aiguille (33).
